# EUROPEAN PATENT SPECIFICATION

(11) **EP 0 777 603 B1**
(45) Date of publication and mention of the grant of the patent: **16.12.1998**
(21) Application number: 95931328.9
(22) Date of filing: 14.09.1995
(51) Int. Cl.: B64F 1/06

(54) **LAUNCHING PROJECTILES**
ABSCHUSSVORRICHTUNG FÜR GESCHOSSE
LANCEMENT DE PROJECTILES

(30) Priority: 15.09.1994 GB 9418628
(43) Date of publication of application: 11.06.1997
(73) Proprietor: AIRSCREW HOWDEN LIMITED, Sunbury-on-Thames, Middlesex TW16 7EF (GB)
(72) Inventor: GRIFFIN, Dennis, Guildford Surrey GU4 8JY (GB)
(74) Representative: Deans, Michael John Percy
(86) International application number: GB9502179
(87) International publication number: WO9608410

(56) References cited:
- FR-A- 402 887
- GB-A- 520 006
- DATABASE WPI Derwent Publications Ltd., London, GB; AN 90-116406 & CN,A,1 032 645 (HUANG ZERONG) , 3 May 1989

## Description

This invention is concerned with launching projectiles, such as (but not restricted to) remote piloted vehicles (RPVs), also known as unmanned air vehicles (UAVs) and as unmanned aircraft (UMAs).

A wide variety of different launch systems are available for RPVs.

One such system is that described in GB-A-2132577 which discloses a flywheel operated launcher. While successful and readily controllable, this launcher has proved relatively expensive in comparison with perhaps technically less successful competing designs. Such designs have included bungee launchers and gas guns. The flywheel system involves the use of heavy masses to provide in effect a store of inertial momentum. The bungee and gas gun systems operate on a stored energy principle. The use of relatively large stores of potential energy in this way is inherently dangerous. The stored energy systems such as the gas gun or bungee, while relatively simpler in design than the flywheel systems suffer from lack of control of the initial rate of change of accelerating forces (the "jerk") which can prove excessive and damage the RPV. In addition, as the energy is released, the accelerating force reduces markedly.

FR-A-402887 (Means), dated 1909, proposes a launcher in which a collapsing partial vacuum behind the piston of a piston and cylinder arrangement is intended to launch a projectile mounted on a trolley connected by cable to the piston. The trolley runs on rails across a table and the projectile is intended to separate from the trolley as the trolley falls over the edge of the table.

The present invention has arisen from our work seeking to overcome the difficulties inherent in the previous designs.

As will be clear from the description which follows below, we have found that it is possible to use atmospheric pressure to launch an RPV to flying speed by allowing vacuum between a primary piston and a contra-piston in a piston and cylinder arrangement to collapse, thereby pulling on a cable or other tension element to propel the RPV forwardly.

Accordingly, the invention provides, in its broadest aspect, use of a collapsing at least partial vacuum in a piston and cylinder arrangement to provide a forward propelling force to launch a projectile; characterized in that said at least partial vacuum is created between a primary piston and a contra-piston at least in part by drawing the contra-piston.

In a more specific aspect of the invention, there is provided use of a tension gas spring to launch a projectile, the tension gas spring comprising a cooperating piston and cylinder arrangement in which at least a partial vacuum may be created behind the piston, the piston being coupled to the projectile via a tension element and a releasable coupling, whereby collapse of the vacuum is effective to apply a forward propelling force to the projectile via the tension element and the releasable coupling, the coupling being released at launch velocity of the projectile; characterized in that the piston and cylinder arrangement comprises a cylinder having two pistons, namely a primary piston and a contra-piston, in that said at least partial vacuum is created behind the primary piston at least in part by moving the contra-piston along the length of the cylinder to provide a vacuum filled space between the two pistons, and in that the primary piston is coupled to the projectile via the tension element and releasable coupling.

The invention may also be embodied in the form of a launcher, and the invention accordingly further provides in a yet alternative aspect thereof, apparatus for launching an unmanned air vehicle or other projectile, comprising: a tension gas spring consisting of a cooperating piston and cylinder arrangement in which at least a partial vacuum may be created behind the piston, a tension element coupled to the piston and a releasable coupling for interconnecting the tension element and the vehicle or other projectile and adapted to be released at launch velocity, whereby collapse of said vacuum is effective to apply a forward propelling force to the projectile via the tension element; characterized in that the piston and cylinder arrangement comprises a cylinder having two pistons, namely a primary piston and a contra-piston, in that said at least partial vacuum may be created behind the primary piston at least in part by moving the contra-piston along the length of the cylinder to provide a vacuum filled space between the two pistons, and in that the tension element is coupled to the primary piston.

The tension element may simply comprise an appropriate cable. The vehicle or other projectile may simple be mounted on a trolley which is attached to the end of the cable remote from the piston, this trolley comprising the releasable coupling. The trolley may be wheeled or be arranged to run on rails, but in either event, the vehicle is released from the trolley when the trolley hits a buffer stop and is brought to a halt.

The piston and cylinder arrangement may have a closed end. In an alternative arrangement that "closed" end may be coupled to a suction pump.

The invention is hereinafter more particularly described by way of example only with reference to the accompanying drawings in which:-
Fig. 1 is a generally schematic view of an embodiment of apparatus constructed in accordance with this present invention; and
Fig. 2 is a further partial schematic view of a variation of the arrangement shown in Fig. 1.

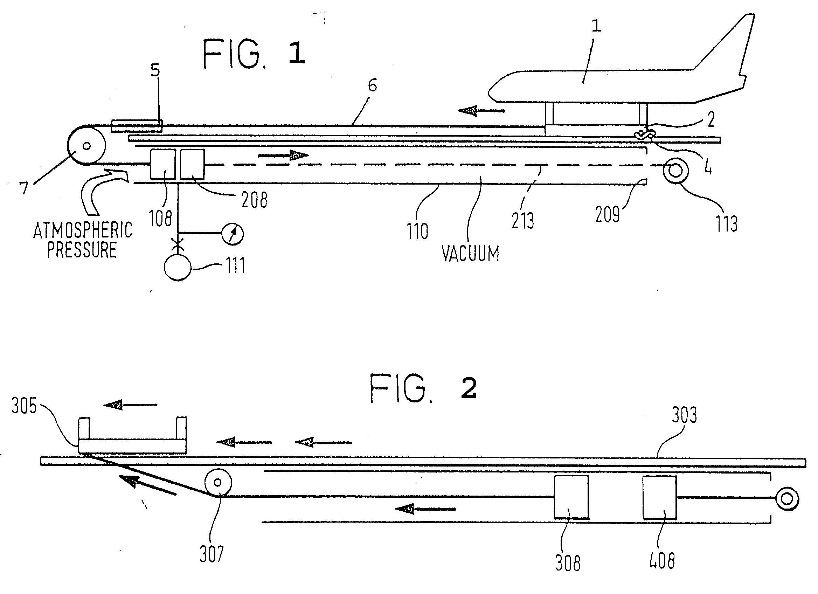

In the launch system illustrated in Fig. 1, an RPV 1 is mounted on a trolley 2 which runs on rails 3 between a start position defined by latch 4 and a stop position defined by trolley buffer stop 5. Coupled to the trolley 2 is a tension cable 6 which passes over a pulley 7 and is connected to a piston 108 of a cooperating piston and cylinder arrangement.

A winch 113 forms part of the piston and cylinder arrangement. Mounted in cylinder 110 is a primary piston 108 and also a second piston 208 which, as explained below, operates as a contra piston. The cylinder 110 does not have a closed end in this embodiment, winch 113 being connected by a winch cable 213 to contra piston 208.

In the illustrated arrangement of Fig. 1, the trolley is first moved to its start position and held by latch 4. This does not require the use of a powerful winch because this movement to the start position is not against a vacuum. With the trolley 2 in this start position, piston 108 is positioned adjacent the distal end of cylinder 110. Suction pump 111 is coupled to cylinder 110 just behind piston 108 in this forward position. Operation of the suction pump draws contra piston 208 into contact with the principal piston 108. Winch 113 is then operated to draw contra piston 208 down the cylinder 110 to its proximal end 209 which, of course, is not closed in this arrangement. The vacuum is enhanced and a vacuum space created behind piston 108 between that piston and the contra piston 208. Winch 113 and/or contra piston 208 are latched to prevent reverse movement of the contra piston 208 when it reaches proximal end 209 of cylinder 110. The RPV is loaded on the trolley, its engine started and its controls checked. The safety pin is then removed so that the trolley would be free to move on release of the latch. Latch 4 is released via a lanyard and the trolley moves forwardly under tension in the cable 6 as the vacuum behind piston 108 collapses, while contra piston 208 is held.

The trolley 2 comes to a halt when it hits trolley buffer stop 5 and the RPV 1 is launched.

We have found that the system can readily be engineered to provide an appropriate launch velocity for an RPV. In one practical embodiment, a cylinder tube of internal diameter 410 mm and with a length of 3.5 m provides a near constant vacuum pull of 11880N, at a differential pressure of 0.09 MPa. This is sufficient to accelerate a total moving mass of 120 Kg to 24 m/s in a distance of 3 m.

A similar effect can be achieved by using a multiplicity of smaller diameter tubes (for example four tubes each of 205 mm diameter). In this case, of course, the cable 6 either comprises a number of separate cables running in parallel or divides in order to provide a separate tension element for the piston 108 of each of the parallel operating smaller piston and cylinders. Smaller cylinder tubes are easier to manufacture and can employ significantly thinner wall thicknesses.

Since the level of vacuum achieved is important for success of the launch, the seal between the pistons and the cylinder is of considerable importance. Arrangements which provide a permanent seal between the pistons and the cylinder rather than simply having seal rings and the like on the piston are to be preferred. One such arrangement, already known per se is a rolling diaphragm seal. Such a seal effectively comprises an annular diaphragm, the inner radius of which is permanently affixed to the outer surface of the piston and the outer circumferential edge of which is permanently connected to the cylinder either on its internal surface or by being rolled over the distal end and affixed to the exterior. For ease of illustration in Fig. 1, the preferred rolling diaphragm seal has been omitted.

In the arrangement shown in Fig. 1, the RPV engine can be started prior to the winching operation so that there is less possibility of vacuum decay due to leakage since the launcher can be released as soon as contra piston 208 reaches proximal end 209 of cylinder 110. The possibility of a winch being left connected to the trolley (which would of course inhibit launch) is avoided because winch 113 remains permanently coupled to contra piston 208.

In the arrangements of Fig. 1, the trolley on which the RPV is mounted is brought to a halt by coming up against a buffer stop. Fig. 2 illustrates a variation of the Fig. 1 arrangement which avoids the need for a buffer stop. There being no buffer, the trolley 305 continues to travel along the rail 303 after the trolley comes level with pulley 307. From this point on, the momentum of the trolley pulls against the piston 308 and tends to recreate vacuum between that piston and the contra piston 408, thereby creating a decelerating force on the trolley both launching the RPV (not shown in Fig. 3) and rapidly bringing the trolley to a halt. If the contra piston is released during this phase of the travel in effect by unlocking the winch, the contra piston can be drawn with the piston back towards its starting position, thereby partially rearming the device for the next launch. There will of course be significant friction losses in the system so that the trolley comes to a halt rather than oscillating about the central position of the pulley.

We have found that sealing of the system is most crucial in the first few centimetres of motion of the dynamic piston 108. For this reason, our preferred embodiment employs a special close-tolerance section in the forward end of the cylinder and an additional high-integrity O-ring seal to cover these first few centimetres of motion. Thereafter, once the piston is accelerating, seal integrity is less vital and a lip seal may suffice. The contra piston 208 may be provided with a conventional multi-stage O-ring seal as its friction with the cylinder is not important.

## Claims

1. Use of a collapsing at least partial vacuum in a piston and cylinder arrangement to provide a forward propelling force to launch a projectile; characterized in that said at least partial vacuum is created between a primary piston and a contra-piston at least in part by drawing the contra-piston.

2. Use of a tension gas spring to launch a projectile, the tension gas spring comprising a cooperating piston and cylinder arrangement in which at least a partial vacuum may be created behind the piston, the piston being coupled to the projectile via a tension element and a releasable coupling, whereby collapse of the vacuum is effective to apply a forward propelling force to the projectile via the tension element and the releasable coupling, the coupling being released at launch velocity of the projectile; characterized in that the piston and cylinder arrangement comprises a cylinder having two pistons, namely a primary piston and a contra-piston, in that said at least partial vacuum is created behind the primary piston at least in part by moving the contra-piston along the length of the cylinder to provide a vacuum filled space between the two pistons, and in that the primary piston is coupled to the projectile via the tension element and releasable coupling.

3. Apparatus for launching an unmanned air vehicle or other projectile, comprising: a tension gas spring consisting of a cooperating piston and cylinder arrangement in which at least a partial vacuum may be created behind the piston, a tension element coupled to the piston and a releasable coupling for interconnecting the tension element and the vehicle or other projectile and adapted to be released at launch velocity, whereby collapse of said vacuum is effective to apply a forward propelling force to the projectile via the tension element; characterized in that the piston and cylinder arrangement comprises a cylinder having two pistons, namely a primary piston and a contra-piston, in that said at least partial vacuum may be created behind the primary piston at least in part by moving the contra-piston along the length of the cylinder to provide a vacuum filled space between the two pistons, and in that the tension element is coupled to the primary piston.

4. Apparatus as claimed in Claim 3, further characterized in that the tension element comprises an appropriate cable.

5. Apparatus as claimed in Claim 4, further characterized in that the vehicle or other projectile is mounted on a trolley which is attached to the end of the cable remote from the piston, the trolley comprising the releasable coupling.

6. Apparatus as claimed in Claim 5, characterized in further comprising a buffer stop adapted to bring the trolley to a stop, thereby to release the vehicle or projectile from the trolley.

7. Apparatus as claimed in Claim 5 or 6, further characterized in that the trolley is wheeled, or arranged to run on rails.

8. Apparatus as claimed in any one of Claims 3 to 7, further characterized in that the piston and cylinder arrangement comprises a cylinder having one closed end.

9. Apparatus as claimed in Claim 8, characterized in further comprising a suction pump coupled to the closed end of the cylinder.

## Patentansprüche

1. Nutzung des Zusammenfallens eines wenigstens teilweisen Vakuums in einer Kolben- und Zylinderanordnung zur Erzeugung einer Vortriebskraft zum Abschießen eines Projektils, dadurch gekennzeichnet, daß das genannte wenigstens teilweise Vakuum zwischen einem Primärkolben und einem Gegenkolben wenigstens teilweise durch Ziehen des Gegenkolbens erzeugt wird.

2. Nutzung einer Gaszugfeder zum Abschießen eines Projektils, wobei die Gaszugfeder eine zusammenwirkende Kolben- und Zylinderanordnung umfaßt, bei der wenigstens ein teilweises Vakuum hinter dem Kolben erzeugt werden kann, wobei der Kolben über ein Zugelement und eine lösbare Kupplung mit dem Projektil gekoppelt ist, so daß durch ein Zusammenfallen des Vakuums eine Vortriebskraft über das Zugelement und die lösbare Kupplung auf das Projektil aufgebracht wird, wobei die Kupplung mit Abschußgeschwindigkeit des Projektils gelöst wird, dadurch gekennzeichnet, daß die Kolben- und Zylinderanordnung einen Zylinder mit zwei Kolben - einem Primärkolben und einem Gegenkolben - umfaßt, dadurch, daß das genannte wenigstens teilweise Vakuum hinter dem Primärkolben wenigstens teilweise durch Bewegen des Gegenkolbens über die Länge des Zylinders erzeugt wird, um einen vakuumgefüllten Raum zwischen den beiden Kolben zu erzeugen, und dadurch, daß der Primärkolben über das Zugelement und die lösbare Kupplung mit dem Projektil gekoppelt ist.

3. Vorrichtung zum Abschießen eines unbemannten Flugkörpers oder eines sonstigen Projektils, umfassend eine Gaszugfeder, bestehend aus einer zusammenwirkenden Kolben- und Zylinderanordnung, bei der wenigstens ein teilweises Vakuum hinter dem Kolben erzeugt werden kann, ein Zugelement, das mit dem Kolben und einer lösbaren Kupplung gekoppelt ist, die das Zugelement mit dem Flugkörper bzw. sonstigen Projektil verbindet und mit Abschußgeschwindigkeit gelöst werden kann, so daß durch ein Zusammenfallen des genannten Vakuums eine Vortriebskraft über das Zugelement auf das Projektil aufgebracht wird, dadurch gekennzeichnet, daß die Kolben- und Zylinderanordnung einen Zylinder mit zwei Kolben - einem Primärkolben und einem Gegenkolben - umfaßt, dadurch, daß das genannte wenigstens teilweise Vakuum hinter dem Primärkolben wenigstens teilweise durch Bewegen des Gegenkolbens über die Länge des Zylinders erzeugt werden kann, um einen vakuumgefüllten Raum zwischen den beiden Kolben zu erzeugen, und dadurch, daß das Zugelement mit dem Primärkolben gekoppelt ist.

4. Vorrichtung nach Anspruch 3, ferner dadurch gekennzeichnet, daß das Zugelement ein geeignetes Seil umfaßt.

5. Vorrichtung nach Anspruch 4, ferner dadurch gekennzeichnet, daß der Flugkörper bzw. das sonstige Projektil auf einem Wagen montiert ist, der an dem von dem Kolben entlegenen Ende des Seils befestigt ist, wobei der Wagen die lösbare Kupplung umfaßt.

6. Vorrichtung nach Anspruch 5, ferner dadurch gekennzeichnet, daß sie einen Pufferanschlag umfaßt, der die Aufgabe hat, den Wagen zum Halten zu bringen, um so den Flugkörper bzw. das Projektil von dem Wagen zu lösen.

7. Vorrichtung nach Anspruch 5 oder 6, ferner dadurch gekennzeichnet, daß der Wagen Räder aufweist oder für den Lauf auf Schienen ausgestattet ist.

8. Vorrichtung nach einem der Ansprüche 3 bis 7, ferner dadurch gekennzeichnet, daß die Kolben- und Zylinderanordnung einen Zylinder mit einem geschlossenen Ende umfaßt.

9. Vorrichtung nach Anspruch 8, dadurch gekennzeichnet, daß sie ferner eine Saugpumpe umfaßt, die mit dem geschlossenen Ende des Zylinders gekoppelt ist.

## Revendications

1. Utilisation du cassage d'un vide au moins partiel dans un agencement de pistons et cylindre pour fournir une force de propulsion en avant pour lancer un projectile; caractérisée en ce que ledit vide au moins partiel est créé entre un piston primaire et un contre-piston au moins en partie en tirant le contre-piston.

2. Utilisation d'un ressort à gaz de tension pour lancer un projectile, le ressort à gaz de tension comprenant un agencement de pistons et cylindre coopérant dans lequel au moins un vide partiel peut être créé derrière le piston, le piston étant couplé au projectile par un élément de tension et un accouplement libérable, au moyen de quoi le cassage du vide a pour effet d'exercer une force de propulsion en avant sur le projectile par l'intermédiaire de l'élément de tension et de l'accouplement libérable, l'accouplement étant libéré à la vitesse de lancement du projectile; caractérisée en ce que l'agencement de pistons et cylindre comprend un cylindre ayant deux pistons, à savoir un piston primaire et un contre-piston, en ce que ledit vide au moins partiel est créé derrière le piston primaire au moins en partie en déplaçant le contre-piston sur la longueur du cylindre pour fournir un espace rempli de vide entre les deux pistons, et en ce que le piston primaire est couplé au projectile par l'intermédiaire de l'élément de tension et de l'accouplement libérable.

3. Appareil pour lancer un véhicule aérien télépiloté ou autre projectile, comprenant : un ressort à gaz de tension constitué d'un agencement de pistons et cylindre coopérant dans lequel au moins un vide partiel peut être créé derrière le piston, un élément de tension étant couplé au piston et à un accouplement libérable pour relier l'élément de tension et le véhicule ou autre projectile et adapté pour être libéré à la vitesse de lancement, de telle sorte que ledit vide a pour effet d'exercer une force de propulsion sur le projectile par l'intermédiaire de l'élément de tension; caractérisé en ce que l'agencement de pistons et cylindre comprend un cylindre ayant deux pistons, à savoir un piston primaire et un contre-piston, en ce qu'au moins un vide partiel peut être créé derrière le piston primaire au moins en partie en déplaçant le contre-piston sur la longueur du cylindre pour fournir un espace rempli de vide entre les deux pistons, et en ce que l'élément de tension est couplé au piston primaire.

4. Appareil selon la Revendication 3, caractérisé en outre en ce que l'élément de tension comprend un câble approprié.

5. Appareil selon la Revendication 4, caractérisé en outre en ce que le véhicule ou autre projectile est monté sur un chariot qui est fixé à l'extrémité du câble éloignée du piston, le chariot comprenant l'accouplement libérable.

6. Appareil selon la Revendication 5, caractérisé en ce qu'il comprend en outre un butoir adapté pour arrêter le chariot, pour libérer ainsi le véhicule ou projectile du chariot.

7. Appareil selon la Revendication 5 ou 6, caractérisé en outre en ce que le chariot est muni de roues, ou agencé pour se déplacer sur des rails.

8. Appareil selon l'une quelconque des Revendications 3 à 7, caractérisé en outre ce que l'agencement de pistons et cylindre comprend un cylindre ayant une extrémité fermée.

9. Appareil selon la Revendication 8, caractérisé en ce qu'il comprend en outre une pompe d'aspiration couplée à l'extrémité fermée du cylindre.
